Europäisches Patentamt

(19) European Patent Office

Office européen des brevets

(11) Veröffentlichungsnummer: **0 1 1 5 883**
**B1**

(12) # EUROPÄISCHE PATENTSCHRIFT

(45) Veröffentlichungstag der Patentschrift:
03.05.89

(51) Int. Cl.⁴: **H 04 L 11/16, H 04 Q 11/04, H 04 J 3/16**

(21) Anmeldenummer: **84200019.2**

(22) Anmeldetag: **09.01.84**

(54) Verfahren zum Steuern des Zugriffs auf einen Zeitmultiplex-Nachrichtenübertragungsweg.

(30) Priorität: **10.01.83 DE 3300531**
**13.10.83 DE 3337289**

(43) Veröffentlichungstag der Anmeldung:
**15.08.84 Patentblatt 84/33**

(45) Bekanntmachung des Hinweises auf die Patenterteilung:
**03.05.89 Patentblatt 89/18**

(84) Benannte Vertragsstaaten:
**DE FR GB NL SE**

(56) Entgegenhaltungen:
**EP-A- 0 003 849**

**PROCEEDINGS 1982 INTERNATIONAL SYMPOSIUM ON SUBSCRIBER LOOPS AND SERVICES, 20.-24. September 1982, Seiten 35-39, IEEE, New York, US; R. RENOULIN: "An integrated service local network for distributed access of heterogeneous terminals made for firm management the project carthage"**
**THE INTERNATIONAL SYMPOSIUM ON SUBSCRIBER LOOPS AND SERVICES, 1978, Seiten 156-160, IEEE, New York, US; T.J. PEDERSEN: "An integrated digital subscriber multiplexing and switching system for mixed circuit and packet communication"**
**PROCEEDINGS OF THE IEEE 1981 NATIONAL AEROSPACE AND ELECTRONICS CONFERENCE, Band 1, 1981, Seiten 309-317, IEEE, New York, US; S.J. LARIMER et al.: "A solution to bus contention in a system of autonomous microprocessors"**

(73) Patentinhaber: **Philips Patentverwaltung GmbH, Wendenstrasse 35 Postfach 10 51 49, D-2000 Hamburg 1 (DE)**

(84) Benannte Vertragsstaaten: **DE**

(73) Patentinhaber: **N.V. Philips' Gloeilampenfabrieken, Groenewoudseweg 1, NL-5621 BA Eindhoven (NL)**

(84) Benannte Vertragsstaaten: **FR GB NL SE**

(72) Erfinder: **Killat, Ulrich, Achter Lüthmoor 2c, D-2000 Hamburg 56 (DE)**
Erfinder: **Renelt, Gerhard, Wiebischenkamp 41, D-2000 Hamburg 54 (DE)**
Erfinder: **Riekmann, Dieter, Halstenbeker Strasse 4, D-2080 Pinneberg (DE)**
Erfinder: **Stecher, Rolf, Woyrschweg 26, D-2000 Hamburg 50 (DE)**

(74) Vertreter: **Poddig, Dieter, Dipl.-Ing. et al, Philips Patentverwaltung GmbH Wendenstrasse 35 Postfach 10 51 49, D-2000 Hamburg 1 (DE)**

## Beschreibung

Die Erfindung betrifft ein Verfahren zum Steuern des Zugriffs auf einen Zeitmultiplex-Nachrichtenübertragungsweg, an den eine zentrale Einheit und mehrere Teilnehmer angeschlossen sind und auf dem die zentrale Einheit zyklisch wiederholt Rahmen aus einer vorgegebenen Anzahl von Wörtern mit je einer vorgegebenen Anzahl von Bits erzeugt, wobei jedem Rahmen mindestens ein Signalisierwort zugeordnet ist und ein variabler zusammenhängender Teil der Anzahl der Wörter für Schmalbandkanäle, in denen in jedem Rahmen nur ein Wort übertragen wird, und ein weiterer variabler zusammenhängender Teil der Anzahl der Wörter für die Bildung eines Hochgeschwindigkeitskanals vorbehalten ist, in dem Datenpakete in jeweils einer Folge von aufeinanderfolgenden Wörtern übertragen werden.

Ein derartiges Verfahren ist bekannt aus der US-PS 4 154 983. Dabei wird ein ringförmiger Nachrichtenweg angewendet, und die Auswahl der miteinander zu verbindenden Teilnehmer insbesondere in den Schmalbandkanälen erfolgt über Signalisierinformation in den Signalisierworten einer Folge von Rahmen. Die Grenze zwischen den Schmalbandkanälen und dem Hochgeschwindigkeitskanal wird dadurch gebildet, daß jedem Datenwort ein bestimmtes Markierbit zugeordnet ist, das am Ende der Schmalbandkanäle einen anderen Wert erhält. Die Steuerung des Zugriffs auf den Hochgeschwindigkeitskanal durch einen Teilnehmer erfolgt ebenfalls im wesentlichen über die zentrale Einheit, die daher eine Vielzahl von Steuerfunktionen ausführen muß und entsprechend kompliziert und umfangreich ist.

Aufgabe der Erfindung ist es, ein Verfahren der eingangs genannten Art mit variabler Grenze zwischen Schmalbandkanälen und Hochgeschwindigkeitskanal anzugeben, bei dem der Zugriff auf den Hochgeschwindigkeitskanal nur von den Teilnehmern gesteuert ohne Unterstützung durch die zentrale Einheit erfolgt.

Diese Aufgabe wird erfindungsgemäß dadurch gelöst, daß der Rahmen in mehreren Gruppen von Wörtern eingeteilt ist, denen je ein Signalisierwort zugeordnet ist, daß die zentrale Einheit in den Signalisierwörtern der Gruppen, die Schmalbandkanälen zugeordnet sind, ständig ein vorgegebenes erstes Bitmuster überträgt und daß ein Teilnehmer vor einer Übertragung eines Datenpakets im Hochgeschwindigkeitskanal in einem Signalisierwort einer der Gruppen, die dem Hochgeschwindigkeitskanal zugeordnet sind, ein diesem Teilnehmer zugeordnetes Bitmuster überträgt und bei anschließendem Empfang des ungestörten Bitmusters in der dem Signalisierwort zugeordneten Gruppe sein Datenpaket überträgt. Auf diese Weise erhält ein Teilnehmer, der sein individuell zugeordnetes Bitmuster ungestört empfängt, automatisch Zugriff zu der zugeordneten Gruppe von Wörtern im Hochgeschwindigkeitskanal, ohne daß die Mitwirkung der zentralen Einheit notwendig ist. Andererseits sind die Schmalbandkanäle eindeutig gekennzeichnet und automatisch gegen einen Zugriff durch einen Teilnehmer als Hochgeschwindigkeitskanal gesperrt.

Besonders zweckmäßig ist es, daß alle Gruppen die gleiche Anzahl Wörter enthalten. Dies ergibt eine besonders einfache und übersichtliche Steuerung.

Die Übertragung der Signalisierworte kann auf verschiedene Weise erfolgen, beispielsweise außerhalb der übrigen Nachrichtenkanäle. Ein besonders einfacher Aufbau ergibt sich jedoch dadurch, daß jede Gruppe ein Signalisierwort enthält, das einer folgenden Gruppe zugeordnet ist. Der Abstand zwischen der Gruppe, in der ein Signalisierwort angeordnet ist, und der Gruppe, der dieses Signalisierwort zugeordnet ist, ist für alle Gruppen gleich und bestimmt sich nach der Gesamtlaufzeit der Signale auf dem physikalischen Nachrichtenübertragungsweg.

Wenn mehrere Teilnehmer gleichzeitig auf den Hochgeschwindigkeitskanal zugreifen wollen, muß sichergestellt werden, daß nur ein Teilnehmer schließlich tatsächlich Zugang zu einer Gruppe von Wörtern des Hochgeschwindigkeitskanals erhält. Dies kann auf verschiedene Weisen erfolgen. Eine Möglichkeit besteht darin, daß die den einzelnen Teilnehmern individuell fest zugeordneten Bitmuster verschiedene Prioritäten aufweisen und daß beim gleichzeitigen Übertragen verschiedener Bitmuster von mehreren Teilnehmern im selben Signalisierwort nur das Bitmuster höchster Priorität weitergeleitet wird. Bei fortgesetzten Zugriffsversuchen erhalten mehrere Teilnehmer in der Reihenfolge ihrer Priorität nacheinander Zugriff zum Hochgeschwindigkeitskanal.

Eine andere Möglichkeit, den Zugriff zum Hochgeschwindigkeitskanal nur einem von mehreren Teilnehmern zuzuteilen, besteht darin, daß die binären Werte aus den Bitmustern verschiedener Teilnehmer, die gleichzeitig im selben Signalisierwort übertragen werden, entsprechend einer ODER-Funktion verknüpft werden und daß ein Teilnehmer, der nach dem Aussenden seines Bitmusters an dessen Stelle ein anderes Bitmuster empfängt, nach einer im wesentlichen statistisch bestimmten Zeitspanne erneut sein Bitmuster in einem Signalisierwort überträgt. Hierbei wird also den Teilnehmern, die ein Datenpaket übertragen wollen, in statistischer Reihenfolge Zugang zum Hochgeschwindigkeitskanal gewährt.

In manchen Fällen sind jedoch die einzelnen Teilnehmer nicht untereinander gleichberechtigt, sondern bestimmte Teilnehmer können häufiger bzw. schneller aufeinanderfolgend zu übertragende Datenpakete zur Verfügung haben. Damit solche Teilnehmer nicht zu lange warten müssen, wobei dann ein evtl. vorhandener Pufferspeicher überlaufen könnte, werden den Teilnehmern unterschiedliche Prioritäten beispielsweise bei der Installation des Nachrichtenweges zugeteilt. Um diese Prioritäten bei der letztgenannten Ausgestaltung des Verfahrens für die Auswahl der Reihenfolge des Zugriffs mehrerer Teilnehmer zum Hochgeschwindigkeitskanal zu berücksichtigen, ist es zweckmäßig, daß die Zeitspannen für Teilnehmer mit niedrigerer Priorität länger sind als für Teilnehmer mit höherer Priorität. Die unterschiedlichen Zeitspannungen lassen sich insbesondere dann leicht erzeugen, wenn die Zeitspannen nicht echt statistisch, sondern nur durch mit langer Periode wechselnden Impulsmustern gesteuert werden.

Eine möglichst häufige Auflösung von Konfliktfällen, bei denen also zwei Teilnehmer gleichzeitig auf einem Hochgeschwindigkeitskanal zugreifen, kann erreicht werden, wenn die binären Werte aus den Bitmustern verschiedener Teilnehmer, die gleichzeitig im selben Signalisierwort übertragen werden, entsprechend einer ODER-Funktion verknüpft werden und wenn die den Teilnehmern zugeordneten Bitmuster aus zwei Gruppen von Bitmustern ausgewählt werden, von denen die Bitmuster der ersten Gruppe in einem ersten Bitmusterteil nur Bitwerte des anderen binären Wertes enthalten und die Bitmuster der zweiten Gruppe in einem zweiten Bitmusterteil nur Bitwerte des einen binären Wertes enthalten.

Die möglichst häufige Auflösung von Konfliktfällen wird also durch eine entsprechende Wahl der Bitmuster erreicht. Durch die Auswahlvorschrift der Bitmuster werden zwar eine Anzahl Bitmuster, die bei einer bestimmten Bitmusterlänge möglich sind, nicht ausgenutzt, so daß bei einer gegebenen Anzahl von Teilnehmer längerer Bitmuster erforderlich sind als bei Ausnutzung aller möglichen Bitkombinationen, jedoch ist der dadurch erzeugte zusätzliche Zeitaufwand wesentlich geringer als der Zeitverlust, der durch nicht aufgelöste Konfliktfälle entsteht.

Eine besonders häufige Auflösung der Konfliktfälle ergibt sich, wenn die beiden Bitmusterteile kein gemeinsames Bit enthalten. Dies bedeutet, daß die beiden Bitmusterteile innerhalb des Bitmusters sich nicht überschneiden. Darüber hinaus ergeben sich bei gleichzeitiger optimaler Konfliktauflösung besonders kurze Bitmuster, wenn die beiden Bitmusterteile zusammen genau das vollständige Bitmuster ergeben.

Bei der angegebenen Auswahl der Bitmuster erhält im Falle von zwei Teilnehmern, die gleichzeitig ihr Bitmuster aussenden und bei denen der eine Teilnehmer ein Bitmuster der ersten Gruppe und der andere Teilnehmer ein Bitmuster der zweiten Gruppe aussendet, derjenige Teilnehmer schließlich den Zugriff, der ein Bitmuster der zweiten Gruppe zugeordnet ist. Um diese Tatsache günstig auszunutzen, ist es zweckmässig, wenn beide Bitmusterteile die gleiche Anzahl Bit enthalten. Dies bedeutet, daß das Bitmuster eine gerade Anzahl von Bit enthält.

Da wie vorstehend angegeben die Teilnehmer, denen Bitmuster der zweiten Gruppe zugeordnet sind, im Konfliktfall den Teilnehmern bevorrechtigt sind, denen ein Bitmuster der ersten Gruppe zugeordnet ist, ergibt sich dadurch indirekt eine Prioritätsvergabe. Wenn dies vermieden werden soll, ist es zweckmäßig, daß in den Teilnehmern auf jeweils ein gemeinsames Steuersignal die den einzelnen Teilnehmern zugeordneten Bitmuster zyklisch im Ring gewechselt werden. Auf diese Weise gleicht sich die Bevorrechtigung über eine größere Anzahl von Zugriffen aus.

Eine andere Möglichkeit, die Bevorrechtigung auszugleichen, besteht darin, daß jeweils zwei Teilnehmer paarweise einander zugeordnet sind und auf ein Steuersignal das Bitmuster der jeweils anderen Teilnehmer des Paares übernehmen, wobei ein Bitmuster jedes Paares der Teilnehmer der ersten Gruppe und das andere Bitmuster des Paares der Teilnehmer der zweiten Gruppe angehört.

Um in diesem Fall zu erreichen, daß die einzelnen Teilnehmer untereinander möglichst weitgehend gleichberechtigt sind, ist es zweckmäßig, daß die jeweils zwei zusammengehörigen Bitmuster so ausgewählt werden, daß beide Teilnehmer zusammen bei der Hälfte aller Kollisionsfälle, bei denen ein Teilnehmer den Zugriff zum Datenbus behält, den Zugriff zum Datenbus behalten. Auf diese Weise ist bei einem einander zugeordneten Paar von Teilnehmern jeder Teilnehmer ebenso oft bevorrechtigt wie benachteiligt.

Wenn nur wenige Teilnehmer vorhanden bzw. die Bitmuster ausreichend lang sind, besteht eine andere derartige Methode darin, daß jeder Teilnehmer sowohl ein Bitmuster der ersten Gruppe als auch ein Bitmuster der zweiten Gruppe zugeordnet wird und auf ein Steuersignal hin auf jeweils das andere Bitmuster umgeschaltet wird.

Damit auch dabei alle Teilnehmer wirklich gleichberechtigt sind, ist es zweckmäßig, daß die jeweils zwei zusammengehörigen Bitmuster so ausgewählt werden, daß die Teilnehmer im zeitlichen Mittel bei der Hälfte aller Kollisionsfälle, bei denen ein Teilnehmer den Zugriff zum Datenbus behält, selbst den Zugriff zum Datenbus behält. Dadurch ist für jeden Teilnehmer, dem zwei Bitmuster zugeordnet sind, die Häufigkeit der Bevorrechtigung ebenso groß wie die der Benachteiligung, so daß sich beide Zustände im Mittel aufheben.

Der Schutz der Gruppen mit Schmalbandkanälen vor dem Zugriff von Teilnehmern, die Datenpakete übertragen wollen, kann durch gesonderte Erkennung des in diesen Gruppen zugeordneten Signalisierungsworten übertragenen ersten Bitmusters erfolgen. Eine einfachere Lösung besteht jedoch darin, daß das den Schmalbandkanälen zugeordnete erste Bitmuster höchste Priorität bzw. an jeder Stelle den höchsten in allen übrigen Signalisierwörtern an der Stelle vorkommenden binären Wert aufweist. Dadurch wird das Bitmuster in den Signalisierwörtern für die Gruppen mit Schmalbandkanälen in gleicher Weise behandelt wie die Bitmuster aller anderen Signalisierwörter, wodurch infolge der Zuordnung der höchsten Priorität bzw. der entsprechenden binären Werte die Gruppen mit Schmalbandkanälen automatisch für alle Teilnehmer gegen Zugriff für die Verwendung als Hochgeschwindigkeitskanal gesperrt sind.

In manchen Fällen ist die Gruppe von Wörtern in dem Hochgeschwindigkeitskanal kürzer als das Datenpaket, das ein Teilnehmer übertragen will. Damit dieses Datenpaket nicht in Teile zerrissen wird, die in sehr langen Abständen voneinander übertragen werden, weil beispielsweise zwischenzeitlich ein anderer Teilnehmer mit höherer Priorität auf den Hochgeschwindigkeitskanal zugreift, ist es zweckmäßig, daß ein Teilnehmer, der ein Datenpaket übertragen will, das länger als eine Gruppe von Wörtern ist, bei Empfang seines Bitmusters in mindestens dem nächsten nachfolgenden Signalisierwort ein Bitmuster mit höchster Priorität bzw. mit an jeder Stelle den höchsten in allen übrigen Signalisierwörtern an der Stelle vorkommenden binären Wert aussendet. Das bzw. die folgenden Gruppen werden auf diese Weise dem Teilnehmer mit einem längeren Datenpaket mit Sicherheit zugeordnet, da es sonst keinen Teilnehmer gibt, der diese höchste Priorität hat. Somit kann ein längeres Datenpaket zuverlässig in unmittelbar aufeinanderfolgenden Gruppen von Wörtern im Hochgeschwindigkeitskanal übertragen werden.

Eine Anordnung zur Durchführung des erfindungsgemäßen Verfahrens ist in dem Patentanspruch 19 gekennzeichnet.

Ausführungsbeispiele der Erfindung werden nachstehend anhand der Zeichnung näher erläutert. Es zeigen:

Fig. 1 einen Zeitmultiplex-Nachrichtenübertragungsweg in Schleifenstruktur mit mehreren Teilnehmern,

Fig. 2 den grundsätzlichen Aufbau des Rahmens aus Gruppen von Wörtern,

Fig. 3 und 4 die zeitlichen Verhältnisse des Zugriffes auf einen Hochgeschwindigkeitskanal bei verschiedenen Laufzeiten auf dem Nachrichtenübertragungsweg,

Fig. 5 ein Beispiel für die Verwendung des Hochgeschwindigkeitskanals für den Verbindungsaufbau in einem Schmalbandkanal,

Fig. 6 ein Blockschaltbild für die sendeseitige Steuerung der Signalisierung für den Zugriff auf einen Hochgeschwindigkeitskanal,

Fig. 7 ein Blockschaltbild für die Steuerung des Empfangs eines Datenpaketes über einen Hochgeschwindigkeitskanal,

Fig. 8 ein Blockschaltbild der Steuerung für die Aussendung von Daten in Schmalbandkanälen,

Fig. 9 ein Blockschaltbild der Steuerung für den Empfang von Daten in Schmalbandkanälen.

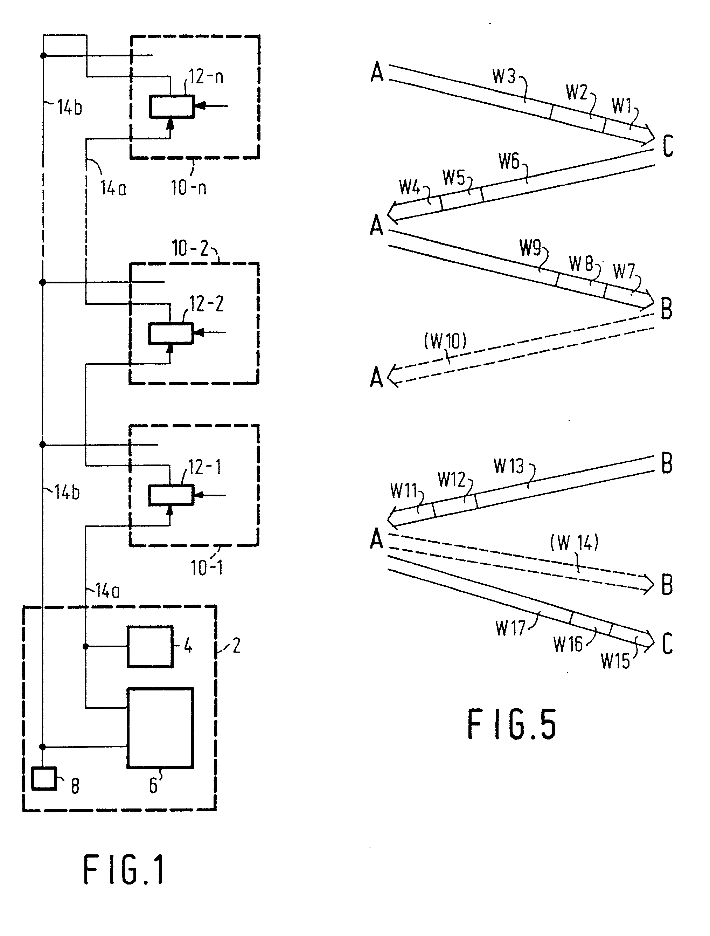

In Fig. 1 ist von einer Schleifenstruktur des Nachritenweges ausgegangen, bei der die Sendeleitung 14a von der zentralen Einheit 2 ausgehend nacheinander alle Teilnehmer 10-1, 10-2, bis 10-n durchläuft und dann als Antwortleitung 14b zur zentralen Einheit 2 zurückgeführt wird, wobei jeweils Abzweigungen zu Empfangseinrichtungen der Teilnehmer 10-1 bis 10-n führen. In jedem der Teilnehmeranschlüsse 10-1 bis 10-n ist in der Sendeleitung 14a eine Einkoppelschaltung 12-1, 12-2 bzw. 12-n vorgesehen, über die der betreffende Teilnehmer Nachrichten auf die Sendeleitung 14a geben kann. Es sind auch andere Anordnungen des Nachrichtenweges möglich, beispielsweise ein ungerichteter Bus oder eine Baumstruktur oder Ringstruktur.

In der zentralen Einheit 2 ist an die Sendeleitung 14a ein Bitmustergenerator 4 angeschlossen, der auf dieser Sendeleitung eine ununterbrochene Folge von Rahmen aus je einer Anzahl Wörtern erzeugt, die je eine Anzahl Bit aufweisen. Bei bekannten Nachrichtenwegen für Sprachübertragung ist die Verwendung von Wörtern mit 8 Bit üblich, und von einer solchen Struktur wird auch im folgenden ausgegangen. An die Empfangsleitung 14b ist ein Abschlußwiderstand 8 angeschlossen, der die Empfangsleitung reflexionsfrei abschließt. Ferner ist an die Sendeleitung 14a und an die Empfangsleitung 14b eine Steuereinrichtung 6 angeschlossen, die insbesondere die Verwaltung und Zuteilung von Schmalbandkanälen versorgt.

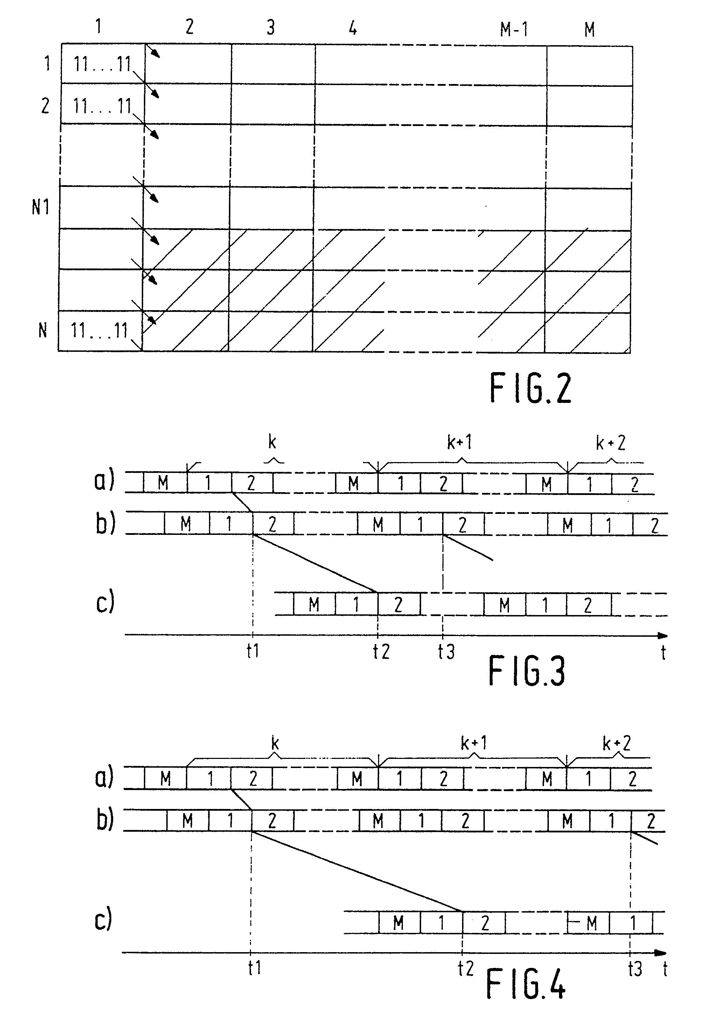

Ein Beispiel für die Struktur eines Zeitmultiplexrahmens, der von dem Generator 4 erzeugt wird, ist in Fig. 2 dargestellt. Dieser Rahmen besteht aus N Gruppen mit je M Wörtern, wobei jedes Wort mit der entsprechenden Anzahl Bit der Einfachheit halber nur als Kästchen dargestellt ist und die zeitlich aufeinanderfolgenden Gruppen von Wörtern der Übersichtlichkeit halber untereinander angeordnet sind. Diese dargestellte Rahmenstruktur wiederholt sich zyklisch, d.h. nach dem Wort M der Gruppe N eines Rahmens folgt das Wort 1 der Gruppe 1 des folgenden Rahmens. Die Synchroninformation zur Erkennung der Struktur des Rahmens in den einzelnen Teilnehmerstationen ist hier nicht näher dargestellt, und es wird angenommen, daß diese Synchroninformation über zusätzliche Kanäle übertragen wird.

Da für die Digitalisierung von Sprachsignalen vor der Übertragung eine Abtastrate von 8 kHz üblicherweise verwendet wird, ist in dem beschriebenen Beispiel die Wiederholfrequenz der Zeitmultiplexrahmen gleich dieser Abtastrate gewählt worden. Für die Übertragung von Sprachsignalen zwischen zwei beliebigen Teilnehmern ist es also ausreichend, in jedem Rahmen jedem aktiven Teilnehmer ein bestimmtes Wort fest zuzuordnen. Jedes Wort in dem Rahmen stellt somit einen Übertragungskanal mit einer Wortfrequenz von 8 kHz dar. Die Zuordnung bzw. Verteilung der Kanäle auf bestimmte Teilnehmer erfolgt über die Steuereinheit 6 in der zentralen Einheit 2 mittels einer Prozedur, die später erläutert wird.

Ein derartiges Kanalraster ist für die Übertragung von Datenpaketen jedoch nicht optimal. Für kleine Datenpakete kann die Rufaufbauphase zur Belegung eines derartigen Kanals eine zeitliche Dauer haben, die in keinem vernünftigen Verhältnis zur Dauer des Datenpaketes steht und somit eine nicht tragbare Verzögerung darstellt sowie die Übertragungskanäle wegen der im Verhältnis umfangreiche Rufaufbauphase ungünstig ausnutzt. Für große Datenmengen ist ein derartiger Kanal jedoch zu langsam, so daß auch hier zu große Verzögerungszeiten auftreten.

Aus diesem Grunde sind die einzelnen Gruppen entsprechend den einzelnen Zeilen in Fig. 2 einem von zwei Abschnitten zugeordnet, wobei der obere Abschnitt mit den Gruppen 1 bis N1 Schmalbandkanälen zugeordnet ist, während die schraffierten Gruppen dem Hochgeschwindigkeitskanal zugeordnet sind.

Das Wort 1 in jeder der Gruppen 1 bis N stellt ein Signalisierwort dar, das in diesem Beispiel der jeweils folgenden Gruppe zugeordnet sein möge, wie die Pfeile andeuten. Das Wort 1 der Gruppe N ist somit das Signalisierwort, das den Worten 2 bis M der Gruppe 1 zugeordnet ist, die Schmalbandkanäle darstellen. Entsprechend ist das Wort 1 der Gruppe 1 den Worten 2 bis M der Gruppe 2 zugeordnet usw.. Das in den den Gruppen von Wörtern für die Schmalbandkanäle zugeordneten Synchronisierwörtern enthaltene Bitmuster wird später erläutert.

Wenn ein Teilnehmer ein Datenpaket übertragen will, überträgt er zunächst in einem Signalwort, das einer Gruppe von Wörtern im Hochgeschwindigkeitskanal zugeordnet ist, ein Bitmuster beispielsweise entsprechend seiner Adresse. Dabei ist zunächst angenommen, daß das betreffende Signalisierwort frei ist bzw. kein Bitmuster entsprechend einer Adresse eines Teilnehmers mit höherer Priorität enthält. Dieses Bitmuster im Signalisierwort wird in der Anordnung nach Fig. 1 auf der Sendeleitung 14a übertragen und kehrt auf der Empfangsleitung 14b nach der Laufzeit gemäß der Länge der Übertragungsstrecke und der Verzögerung der Einkoppelschaltungen 12 in den einzelnen Teilnehmerstationen auch zu der ausstehenden Teilnehmerstation zurück. Wenn diese Teilnehmerstation das ausgesendete Bitmuster ungestört wieder empfängt, ist dies ein Zeichen, daß kein anderer Teilnehmer bzw. kein Teilnehmer mit höherer Priorität versucht hat, in dem betreffenden Signalisierwort sein Bitmuster zu übertragen, und damit sendet die Teilnehmerstation in der Gruppe von Wörtern, die dem Signalisierwort zugeordnet ist, das Datenpaket aus, d.h. beginnend mit dem Wort 2 dieser Gruppe. Das Datenpaket kann beispielsweise in dem Wort 2 mit der Nummer des Teilnehmers beginnen, für den das Datenpaket bestimmt ist. Weitere Steuerinformationen können ggf. daran anschließen.

Der Abstand zwischen dem Signalisierwort in einer bestimmten Gruppe und der Gruppe, der das Signalisierwort zgeordnet ist, hängt von der maximalen Signallaufzeit des Nachrichtenweges ab. Diese maximale Signallaufzeit entsteht bei der Anordnung nach Fig. 1 für die Teilnehmerstation 1, da ein von dieser ausgesendetes Wort die gesamte Sendeleitung und alle anderen Teilnehmerstationen und danach die gesamte Empfangsleitung durchlaufen muß. In Fig. 3 sind die Zeitverhältnisse für den Fall angedeutet, daß diese maximale Signallaufzeit kürzer ist als die Dauer einer Gruppe von Wörtern. In der Zeile a ist die Rahmenstruktur zu dem Zeitpunkt angedeutet, zu dem sie von dem Generator 4 in der zentralen Einheit 2 ausgesendet wird. Dabei sind zwei vollständige Gruppen k und k+1 sowie der Anfang der danach folgenden Gruppe k+2 angedeutet, und in diesen Gruppen sind nur die ersten beiden Wörter 1 und 2 sowie das letzte Wort M bezeichnet. Diese Rahmenstruktur erreicht die Teilnehmerstation 10-1 eine kurze Zeit später, wie in der Zeile b angedeutet ist. Zum Zeitpunkt t1 hat der Teilnehmer 10-1 in dem Signalisierwort 1 der Gruppe k das vollständige zugeordnete Bitmuster auf die Sendeleitung übertragen. Dieses Bitmuster durchläuft die gesamte Sendeleitung und alle Teilnehmerstationen und kehrt auf der Empfangsleitung zurück zur Teilnehmerstation 10-1, wo es zum Zeitpunkt t2 vollständig und ungestört ankommt, wie in der Zeile c angedeutet ist. Da der Beginn des zweiten Wortes der nachfolgenden Gruppe k+1 beim Zeitpunkt t3 nach dem Zeitpunkt t2 liegt, kann damit das Aussenden des Datenpaketes beginnen. In diesem Falle ist also jedes Signalisierwort der nachfolgenden Gruppe zugeordnet. Wenn dagegen die Signallaufzeit auf dem Nachrichtenweg zwischen dem Senden eines Bitmusters und dessen Empfang für die Teilnehmerstation 10-1 länger ist als die Dauer einer Gruppe von Wörtern, treten die in der Fig. 4 angedeuteten Zeitverhältnisse auf. Die Zeilen a und b stimmen mit der Fig. 3 überein. Auch hier hat also die Teilnehmerstation 10-1 zum Zeitpunkt t1 ihr vollständiges Bitmuster in dem Signalisierwort 1 der Gruppe k ausgesendet. Der Zeitpunkt t2 des vollständigen Empfanges dieses Bitmusters in der Teilnehmerstation 10-1, zu dem diese Teilnehmerstation also erst sicher sein kann, daß das Bitmuster ungestört empfangen worden ist, liegt nach dem Beginn des Wortes 2 der Gruppe k+1. Damit kann die Teilnehmerstation 10-1 also nicht mehr mit dem Wort 2 der Gruppe k+1 mit der Übertragung des Datenpaketes beginnen, sondern erst mit dem zweiten Wort der Gruppe k+2 zum Zeitpunkt t3. In diesem Falle ist also jedes Signalisierwort der übernächsten Gruppe zugeordnet. Daran ändert auch die Tatsache nichts, daß für Teilnehmerstationen, die näher am Ende der Schleife liegen, die Übertragungszeit kürzer ist als die Dauer einer Gruppe von Worten, da die Zuordnung von Signalisierwort zu einer Gruppe für alle Teilnehmerstationen gleich sein muß.

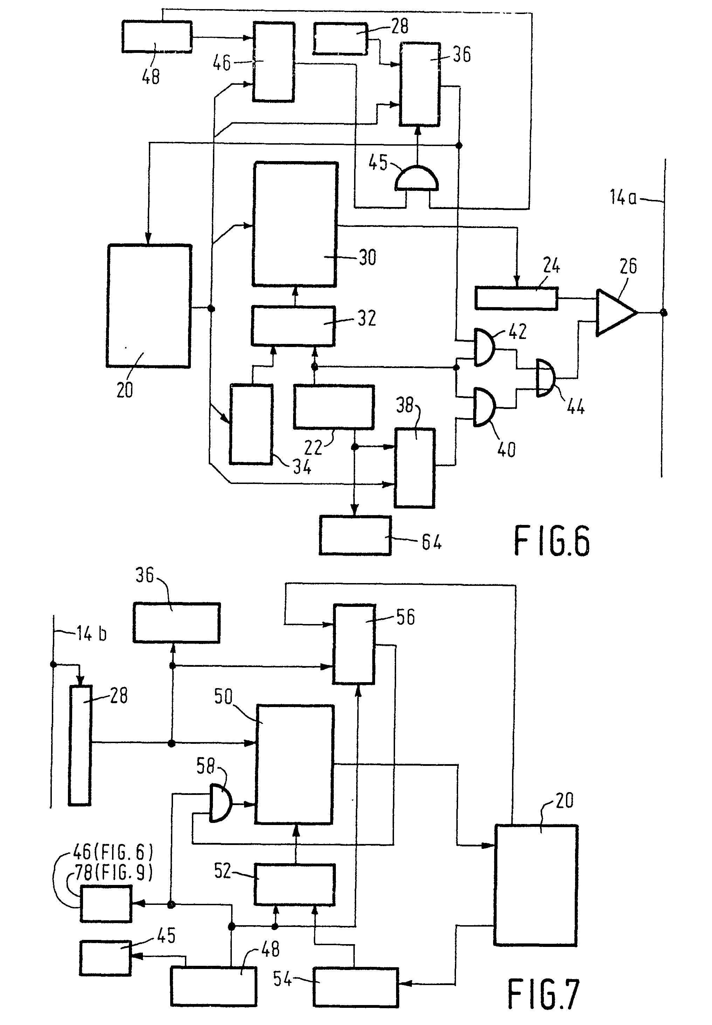

Die Datenpakete können verschiedenste Daten enthalten. Insbesondere ist es auch möglich, mittels Datenpaketen, die im Hochgeschwindigkeitskanal übertragen werden, eine Schmalbandverbindung zwischen zwei Teilnehmern aufzubauen. Dies ist in Fig. 5 symbolisch dargestellt. Es wird angenommen, daß der Teilnehmer A mit dem Teilnehmer B eine Verbindung wünscht. Dafür überträgt der Teilnehmer A in einer Gruppe von Wörtern im Hochgeschwindigkeitskanal im ersten Wort W1 die Adresse der zentralen Einheit als Zieladresse und im folgenden Wort W2 die eigene Adresse als Quelladresse. Im nachfolgenden Wort W3 und ggf. weiteren nachfolgenden Wörtern kann die Art des Verbindungswunsches näher spezifiziert werden. Die zentrale Einheit führt Buch über die Belegung der Schmalbandkanäle und wählt aufgrund der Anfrage des Teilnehmers A ein freies Kanalpaar aus. Dieses sendet die zentrale Einheit in einem folgenden Datenpaket in einer beliebigen folgenden Gruppe von Wörtern im Hochgeschwindigkeitskanal dem Teilnehmer A zu, wobei in dem ersten Wort W4 dieses Datenpaketes die Adresse des Teilnehmers A als Zieladresse und in dem folgenden Wort W5 die Adresse der zentralen Einheit als Quelladresse enthalten ist, während die zwei Kanäle beispielsweise in Form der Nummer der betreffenden Gruppe von Schmalbandkanälen und der Nummer von zwei Wörtern darin in dem nachfolgenden Wort bzw. Wörtern W6 angegeben werden.

Danach sendet der Teilnehmer A ein Datenpaket in einer folgenden Gruppe von Wörtern im Hochgeschwindigkeitskanal zum Teilnehmer B, wobei in dem ersten Wort W7 des Datenpakets die Adresse des Teilnehmers B und im folgenden Wort W8 die Adresse des Teilnehmers A und in dem danach folgenden Wort bzw. Wörtern W9 die Angaben über die Kanalnummern übertragen werden, wie der Teilnehmer A diese von der zentralen Einheit erhalten hat. Sofern gewünscht, kann der Teilnehmer B nun noch eine Quittungsmeldung in Form eines Datenpakets W10, das ähnlich wie die vorher beschriebenen aufgebaut ist, über den Hochgeschwindigkeitskanal zum Teilnehmer A übersenden. Nun wird der Sprechverkehr zwischen den beiden Teilnehmern A und B in beiden zugeteilten Schmalbandkanälen geführt.

Wenn das Gespräch beendet wird, beispielsweise durch den Teilnehmer B, übersendet dieser ein Datenpaket zum Teilnehmer A, das in den ersten Wörtern W11 und W12 wieder die Adresse der beiden Teilnehmer und im nachfolgenden Wort bzw. Wörtern W13 einen Code für die Auslösemeldung enthält. Auch hier kann falls gewünscht der Teilnehmer A eine Quittungsmeldung W14 über den Hochgeschwindigkeitskanal an den Teilnehmer B liefern, daß die Auslösemeldung angekommen ist. Sobald danach auch der Teilnehmer A das Gespräch beendet, d.h. beispielsweise den Hörer einhängt, überträgt er über den Hochgeschwindigkeitskanal ein Datenpaket an die Zentrale, das in den ersten Wörtern W14 und W15 wieder die Adresse der Zentrale und des Teilnehmers A enthält und in den nachfolgenden Wörtern W16 ein Codewort für die Freigabe und ggf. die Nummern der beiden freigegebenen Kanäle. Diese werden in der Zentrale dann wieder als frei registriert.

Laufen in der zentralen Einheit mehr Verbindungswünsche ein, als freie Schmalbandkanäle vorhanden sind, so kann die zentrale Einheit die Anzahl der Schmalbandkanäle dadurch unmittelbar erhöhen, daß sie in dem Signalisierwort für die erste Gruppe von Wörtern im Hochgeschwindigkeitskanal nach den Schmalbandkanälen ebenfalls das den Schmalbandkanälen zugeordnete Bitmuster überträgt. Damit wird die entsprechende Gruppe von Wörtern unmittelbar gegen Zugriffe von Teilnehmern direkt als Hochgeschwindigkeitskanal gesperrt.

Der Zugriff auf eine Gruppe von Wörtern im Hochgeschwindigkeitskanal durch einen Teilnehmer direkt ist ohne weiteres klar, wenn dieser Teilnehmer der einzige ist, der in einem bestimmten Signalisierwort ein Bitmuster aussendet. Es kann jedoch auch der Fall auftreten, daß mehrere Teilnehmer gleichzeitig auf die gleiche Gruppe von Wörtern im Hochgeschwindigkeitskanal zugreifen und in dem zugeordneten Signalisierwort jeweils ihre zugeordneten Bitmuster übertragen. In diesem Falle muß sichergestellt werden, daß nur ein Teilnehmer Zugang zu der diesem Signalisierwort zugeordneten Gruppe erhält und daß dieser Teilnehmer auch unmittelbar über diese Tatsache informiert ist, während die anderen konkurrierenden Teilnehmer ebenfalls unmittelbar erkennen, daß sie keinen Zugriff erhalten haben. Dafür können verschiedene Methoden angewandt werden.

Eine mögliche Methode besteht darin, daß das Bitmuster auf der Sendeleitung, das alle in der Schleife folgenden Teilnehmerstationen durchläuft, in jeder folgenden Teilnehmerstation, die ein Datenpaket übertragen will, daraufhin untersucht wird, ob es höhere Priorität hat als das eigene Bitmuster. Wenn dies zutrifft, wird das auf der Sendeleitung ankommende Bitmuster unverändert weitergeleitet, und anderenfalls wird das eigene Bitmuster statt dessen weitergeleitet. Dadurch erhält derjenige von den übertragungsbereiten Teilnehmern das Senderecht, der das Bitmuster mit der höchsten Priorität aussendet.

Eine andere Möglichkeit besteht darin, daß auf der Sendeleitung alle Bitmuster im Sinne einer ODER-Funktion verknüpft werden. Dies hat zur Folge, daß bis auf den Fall, daß die Verknüpfung gerade die Adresse eines Teilnehmers ergibt, der ein Datenpaket aussenden will, keiner der übertragungsbereiten Teilnehmer das Senderecht erhält. Diese müssen vielmehr erneut versuchen, ein freies Signalisierwort zu treffen, indem sie nach statistisch sich verändernden Zeiten erneut das eigene zugeordnete Bitmuster übertragen.

Die Möglichkeit, daß ein übertragungsbereiter Teilnehmer von vornherein ein freies Signalisierwort sucht, ist nicht ohne weiteres möglich, da dann die Priorität der Teilnehmer unmittelbar ihrer Reihenfolge in dem Übertragungsweg entspricht, d.h. der Teilnehmer, der der zentralen Einheit am nächsten liegt, hat automatisch die höchste Priorität, da er stets nur freie Signalwörter außer bei den Schmalbandkanälen antrifft. Diese Verteilung der Priorität ist jedoch oft unerwünscht.

Beiden vorstehend beschriebenen Möglichkeiten ist gemeinsam, daß das Bitmuster mit höchster Wertigkeit bzw. das Bitmuster, das an allen Stellen den logischen Wert «1» enthält, immer obsiegt. Dieses Bitmuster kann daher von der zentralen Einheit in den Signalisierwörtern ausgesendet werden, die den Gruppen mit den Schmalbandkanälen zugeordnet sind. Da keiner der Teilnehmer eine derart hohe Priorität bzw. den logischen Wert «1» nicht in allen Stellen enthält, sind dadurch die Schmalbandkanäle automatisch vor dem direkten Zugriff durch einen Teilnehmer geschützt.

Beide Methoden können dadurch modifiziert werden, daß ein Teil der Bits des Bitmusters als Prioritätsbits ausgewertet werden, die von dem zugehörigen Teilnehmer ggf. auch verändert werden können. Im einfachsten Falle besteht das Bitmuster dabei aus einem Teil, der die Adresse des betreffenden Teilnehmers angibt, und einem Teil, der nur die Priorität angibt. Die Wirkung dieser Modifikation ist bei der ersten Methode, bei der nur die Bitmuster höchster Priorität weitergeleitet werden, unmittelbar klar.

Bei der zweiten Methode führt die Modifikation insbesondere dann zu einer besseren Ausnutzung der Kanäle, wenn jeder Stelle im Teil des Bitmusters für die Priorität nur ein Teilnehmer zugeordnet ist. Wenn also mehrere Teilnehmer gleichzeitig ein Bitmuster im selben Signalisierwort aussenden, brauchen diese nach dem Empfang dieses Bitmusters nur zu untersuchen, an welcher höchsten Stelle ein Prioritätsbit vorhanden ist. Nur der dieser Stelle zugeordnete Teilnehmer erhält dann eindeutig Zugriff, während die anderen Teilnehmer ihren Versuch wiederholen müssen. Somit kann abweichend von der Forderung, daß im Kollisionsfall alle sich bewerbenden Teilnehmer warten müssen, wodurch dann der entsprechende Hochgeschwindigkeitskanal nicht ausgenutzt werden kann, der der höchsten Stelle zugeordnete Teilnehmer unmittelbar auf den Hochgeschwindigkeitskanal zugreifen.

Diese Art der Prioritätszuordnung kann jedoch nur bei einer kleinen Anzahl von Teilnehmern angewendet werden, wenn die für die Prioritätskennzeichnung verwendeten Signalisierwörter nicht zu viel Anteil der Gesamtheit der Übertragungskanäle beanspruchen sollen. Im allgemeinen Fall, wenn mehrere Teilnehmer mit jeweils gleicher Priorität vorhanden sind, können diese bei der zweiten Methode verwendet werden, um Klassen von Verzögerungszeiten zu definieren, nach denen die einzelnen Teilnehmer nach einem Zugriffsversuch erneut einen Versuch starten. Beispielsweise ist es möglich, nur zwei verschiedene Klassen von Verzögerungszeiten festzulegen, und zwar die eine Klasse für den Normalfall und die andere Klasse für solche Teilnehmer, bei deren Zugriffsversuch gleichzeitig ein Zugriff eines anderen Teilnehmers höherer Priorität erfolgte, der aber seinerseits keinen Zugriff erhalten hat, weil er nicht alleiniger Träger dieser Priorität war. Dabei ist also eine situationsabhängige Anpassung der Priorität notwendig.

Noch eine andere Methode, bei der die Häufigkeit, daß in einem Konfliktfall ein Teilnehmer wirklich den Zugriff behält, möglichst groß ist und außerdem mit geringem Aufwand eine für alle Teilnehmer gleiche Priorität erhalten werden kann, ergibt sich durch eine bestimmte Auswahl der verwendeten Bitmuster aus dem bei gegebener Länge der Bitmuster möglichen Bitkombinationen. Es wird nun nachfolgend beschrieben, wie die Bitmuster ausgewählt und den Teilnehmern zugeordnet werden können, um möglichst oft zu erreichen, daß die Verknüpfung von zwei Bitmustern eines dieser beiden Bitmuster erhält, so daß bei Kollisionsfällen, wenn zwei Teilnehmer gleichzeitig ihre Bitmuster über dem Datenbus aussenden, möglichst oft eines der beiden Bitmuster erhalten bleibt und der zugehörige Teilnehmer anschließend eine Information übertragen kann. Zunächst ist mit dieser Bitmusterauswahl und deren unmittelbaren Zuordnung zu jeweils eines Teilnehmers eine Prioritätsregelung verbunden. Es wird anschließend jedoch auch noch beschrieben, wie diese Prioritätenregelung so durchgeführt werden kann, daß im Mittel alle Teilnehmer untereinander gleichberechtigt werden.

Das von einem Teilnehmer ausgesendete Bitmuster enthält eine Anzahl von n Bit. Von der Menge der Bitmuster, die mit diesen n Bit gebildet werden können, werden zwei Gruppen ausgewählt. In der ersten Gruppe enthalten die Bitmuster beispielsweise an den ersten $n_1$ Stellen nur den Wert 0. Dabei ist dieser Wert 0 auf die ODER-Verknüpfung auf den Datenbus bezogen, d.h. die Verknüpfung eines Bits mit dem Wert 0 mit einem Bit mit dem Wert 1 ergibt ein Bit mit dem Wert 1. Die erste Gruppe enthält aufgrund der einschränkenden Bildungsvorschrift maximal $2^{(n-n_1)}$ Bitmuster. In der zweiten Gruppe enthalten alle Bitmuster an den beispielsweise letzten $n_2$ Stellen nur Bits mit dem Wert 1. Damit enthält die zweite Gruppe maximal $2^{(n-n_1)}$ Bitmuster. Nachstehend ist ein Beispiel in allgemeiner Form angegeben:

Bitmuster der Gruppe 1 000XXXXX
Bitmuster der Gruppe 2 XXXX1111.

Darin bedeuten die Symbole X, daß an diesen Stellen die Bitwerte 0 oder 1 enthalten sein können. Es ist zu erkennen, daß jedes Bitmuster der Gruppe 2 bei einer ODER-Verknüpfung mit einem Bitmuster der Gruppe 1 erhalten bleibt, wenn die beiden Bitmusterteile mit festem Inhalt gerade das gesamte Bitmuster ergeben, d.h. wenn $n_1 + n_2$ = n ist. Um diesen Effekt möglichst gut auszunutzen, sollten beide Gruppen gleich groß sein, d.h. beide Bitmusterteile untereinander gleich lang sein, so daß $n_1 = n_2 = n/2$ ist.

Ein vollständigeres Beispiel für derart gebildete Bitmuster mit n = 8 Bits ist in der Tabelle am Schluß der Beschreibung dargestellt. Daraus ist zu erkennen, daß insgesamt 31 Bitmuster gebildet werden können. Die Bitmuster 1 bis 15 gehören zur Gruppe 1, die Bitmuster 17 bis 31 zur Gruppe 2. Das Bitmuster 16 gehört beiden Gruppen an. In der Gruppe 1 haben die ersten vier Bit den Wert 0, und die letzten vier Bit durchlaufen alle binären Zahlen, die mit vier Bit darstellbar sind. Entsprechendes gilt für die Bitmuster der Gruppe 2, bei denen die ersten vier Bit alle binären Zahlen durchlaufen und die letzten vier Bit den Wert 1 haben. Wenn 31 Teilnehmer vorhanden sind, denen jeweils ein anderes der in der Tabelle angegebenen 31 Bitmuster zugeordnet wird, so ergibt sich bei Kollisionsfällen von beliebigen zwei Teilnehmern eine Wahrscheinlichkeit von etwa 76%, daß eines der beiden Bitmuster erhalten bleibt. Wenn bei solchen Kollisionsfällen von zwei Teilnehmern der eine Teilnehmer das Bitmuster 1, 16 oder 31 zugeordnet ist, bleibt stets eines der beiden verknüpften Bitmuster erhalten. Die Fälle, wo bei Kollisionsfällen keines der Bitmuster erhalten bleibt, verteilen sich etwa gleichmäßig auf die übrigen Bitmuster. Bei einer festen Zuordnung der in der Tabelle angegebenen Bitmuster auf die Teilnehmer ergibt sich keine gleichmäßige Prioritätsvergabe, denn ein Bitmuster der Gruppe 2 bleibt immer gegenüber einem Bitmuster der Gruppe 1 erhalten, und innerhalb der Gruppe 1 bleibt immer das Bitmuster 16 erhalten, und innerhalb der Gruppe 2 bleibt immer das Bitmuster 31 erhalten.

Um eine ungleichmäßige Prioritätsvergabe zu vermeiden, muß die Zuordnung der Bitmuster zu den Teilnehmern gewechselt werden. Dies läßt sich beispielsweise dadurch erreichen, daß auf ein bestimmtes Steuersignal hin, das beispielsweise im Synchronisierwort S enthalten sein kann, alle Teilnehmer das Bitmuster der jeweils vorhergehenden Teilnehmer übernehmen, wobei der erste Teilnehmer das Bitmuster des letzten Teilnehmers übernimmt. Dies braucht selbstverständlich nicht durch eine externe Datenübertragung, beispielsweise über den Datenbus 8, erfolgen, sondern alle Bitmuster sind in jedem Teilnehmer gespeichert, und der Teilnehmer schaltet dann jeweils auf das nächste gespeicherte Bitmuster weiter.

Eine andere Möglichkeit, die unter Umständen leichter realisierbar ist, besteht darin, daß jeweils zwei Teilnehmer bezüglich ihrer Bitmuster ein Paar bilden, wobei der eine Teilnehmer ein Bitmuster der Gruppe 1 und der andere Teilnehmer ein Bitmuster der Gruppe 2 zugeordnet ist. Auch hierbei ist zum Austausch der Bitmuster keine Übertragung notwendig, sondern jeder Teilnehmer kann das neue Bitmuster auf folgende Weise bilden:

Schritt 1: Der Bitmusterteil mit den vier Nullen eines Bitmusters der Gruppe 1 wird hinter die übrigen vier Bit gesetzt;

Schritt 2: Das entstandene Bitmuster wird invertiert.

Diese Paarbildung hat die Eigenschaft, daß für einen Teilnehmer eines Paares in allen möglichen Kollisionsfällen $k_1$-mal das Bitmuster erhalten bleibt und $k_2$-mal nicht erhalten bleibt, und für den zweiten Teilnehmer die umgekehrte Verteilung entsteht, d.h. dessen Bitmuster bleibt $k_2$-mal erhalten und $k_1$-mal nicht erhalten. Bezogen auf das Paar ist es also gleich häufig, daß ein Bitmuster erhalten bleibt bzw. daß es nicht erhalten bleibt. Ist der Prozentsatz an Kollisionsfällen, bei denen kein Bitmuster erhalten bleibt, nur gering, so ergibt sich aus dieser Art der Bitmusterverteilung auf die Paare, daß alle Teilnehmer untereinander gleichberechtigt sind, weil für alle Teilnehmer durch die paarweise Vertauschung der Bitmuster dieses ebenso oft erhalten bleibt wie es nicht erhalten bleibt.

Ein Sonderfall ist dann gegeben, wenn weniger als 16 Teilnehmer bei den in der Tabelle angegebenen Bitmustern vorhanden sind. Dann nämlich kann jeder Teilnehmer quasi mit sich selbst ein Paar bilden, indem jeder Teilnehmer ein Bitmusterpaar der oben genannten Art zugeordnet wird, und jeder Teilnehmer schaltet zwischen den beiden Bitmustern hin und her. Es ist klar, daß auch in diesem Falle alle Teilnehmer im Mittel untereinander gleichberechtigt sind. In diesem Falle käme noch als Vorteil hinzu, daß der Umschaltvorgang ohne Synchronisation mit anderen Teilnehmern erfolgen kann, beispielsweise nach jedem erfolgreichen Übertragungsvorgang. Außerdem kann aus übergeordneten Gesichtspunkten jeder Teilnehmer jederzeit eine relativ hohe Priorität erhalten, indem er z.B. durch eine entsprechende Information über den Datenbus oder durch eigene Steuerung ausschließlich das Bitmuster der Gruppe 2 verwendet und nicht umschaltet.

Manchmal kann bei einem Teilnehmer ein Datenpaket zur Übertragung vorliegen, das länger ist als eine Gruppe von Wörtern. Wenn ein solcher Teilnehmer Zugriff zu einer Gruppe von Wörtern im Hochgeschwindigkeitskanal erhält und einen Teil des Datenpaketes entsprechend der Länge der Gruppe aussendet, können bei dem nächsten Versuch, für den Rest des Datenpaketes erneut Zugriff auf den Hochgeschwindigkeitskanal zu erhalten, andere prioritätshöhere Teilnehmer gleichzeitig einen Zugriff versuchen, die dann somit erfolgreicher sind. Insbesondere bei der Methode, nach der ein Teilnehmer nach einer statistischen Zeitspanne einen erneuten Versuch startet, kann die Übertragung eines längeren Datenpaketes über eine lange Zeitspanne verteilt werden. Dies kann beim Empfang zu Schwierigkeiten führen. Um dies zu vermeiden, kann ein Teilnehmer mit einem längeren Datenpaket, sobald er einen genehmigten Zugriff auf eine Gruppe von Wörtern im Hochgeschwindigkeitskanal erkannt hat, in dem nächstfolgenden Signalisierwort einen erneuten Zugriff für den Rest bzw. einen weiteren Teil des Datenpaketes versuche, wobei jedoch seine Priorität in die höchste Priorität umgewandelt wird. Dadurch erhält dieser Teilnehmer mit dem langen Datenpaket Zugriff zu dem nächsten bzw. mehreren folgenden Gruppen von Wörtern im Hochgeschwindigkeitskanal, so daß das Datenpaket zusammenhängend übertragen werden kann. Dabei ist vorausgesetzt, daß kein anderer Teilnehmer normalerweise diese höchste Priorität hat. Um an der Nahtstelle zwischen dem Hochgeschwindigkeitskanal und den Schmalbandkanälen Schwierigkeiten zu vermeiden, sollte diese höchste Priorität allerdings unter der Priorität liegen, die die zentrale Einheit für die Schmalbandkanäle verwendet.

Nachfolgend wird eine technische Realisierung des Verfahrens erläutert, wobei jedoch jeweils nur die wichtigsten Elemente der Realisierung angegeben sind, soweit diese für die Ausführung von Bedeutung sind.

In Fig. 6 wird über eine Steuerung 20, die beispielsweise über einen fest programmierten Mikroprozessor verwirklicht werden kann, ein Übertragungswunsch von einer daran angeschlossenen Teilnehmerstelle empfangen und aufbereitet. Von dieser Steuerung 20 wird ein Teil des zeitlichen Ablaufs der einzelnen Vorgänge versorgt und einige dafür notwendigen Datenwörter bereitgestellt.

Für einen Zugriff auf eine Gruppe von Wörtern im Hochgeschwindigkeitskanal zur Übertragung

eines Datenpaketes wird dieses von der Steuerung 20 in einen Signalisier-Sendespeicher 30, der eine Anzahl Datenwörter entsprechend einer Gruppe in dem Zeitmultiplexrahmen aufnehmen kann, eingeschrieben. Die Adressierung dieses Speichers 30 erfolgt über einen Multiplexer 32 von einem Adressengenerator 34, der ebenfalls von der Steuerung 20 gesteuert wird. Die Daten des Datenpaketes werden dabei in den Speicher 30 so abgespeichert, daß sie darin in der Reihenfolge des Aussendens enthalten sind, wobei an der ersten Adresse das von der Steuerung 20 erzeugte Bitmuster steht.

Es ist ein Zähler 22 vorhanden, der synchron mit den Wörtern des Zeitmultiplexrahmens auf der Sendeleitung 14a zählt, wobei die Einrichtungen zur Synchronisierung hier der Übersichtlichkeit halber nicht dargestellt sind, da solche bekannt sind. Bei Verwendung eines Binärzählers für den Wortzähler 22 geben die Ausgänge für die unteren Bits die Wortnummer innerhalb der Gruppe an und die Ausgänge für die oberen Bits die Nummern der Gruppen.

Letztere sind mit dem einen Eingang eines Vergleichers 38 verbunden, dessen anderer Eingang von der Steuerung 20 mit der Nummer der Gruppe angesteuert wird, in der das Signalisierwort zum Anmelden eines Verbindungswunsches ausgesendet werden soll.

Diese Nummer einer Gruppe kann die der ersten Gruppe des Hochgeschwindigkeitskanals sein, wenn angenommen wird, daß die zentrale Einheit alle Teilnehmerstellen über den Hochgeschwindigkeitskanal über jede Änderung der Grenze zwischen diesem und den Schmalbandkanälen informiert, damit ein Zugriffswunsch schneller Erfolg hat. Anderenfalls kann es eine beliebige Nummer einer Gruppe sein.

Sobald diese Gruppe von Wörtern in dem Zeitmultiplexrahmen auf der Sendeleitung 14a beginnt, gibt der Vergleicher 38 ein Signal ab und damit ein UND-Glied 40 frei. Gleichzeitig erzeugt der Zähler 22 die Nummer des ersten Wortes dieser Gruppe, d.h. des Signalisierwortes, wodurch ein Ausgangssignal des UND-Gliedes 40 über das ODER-Glied 44 den Sendeverstärker 26 aufsteuert, und außerdem wird diese Adresse über den Multiplexer 32 dem Speicher 30 zugeführt, der damit die 8 Bit der entsprechenden ersten Speicherstelle ausliest und einem Senderegister 24 parallel zuführt, von wo aus sie seriell dem Sendeverstärker 26 zugeführt werden. Dieser sendet damit auf der Sendeleitung 14a das entsprechende, in diesem 8-Bit-Wort enthaltene Bitmuster auf der Sendeleitung 14a aus, unabhängig davon, ob sich in diesem Augenblick bereits Daten auf der Sendeleitung befinden.

Ein weiterer Vergleicher 36 vergleicht die Bitmuster, die im Empfangsregister 28, das nachstehend anhand der Fig. 7 erläutert wird, empfangen werden, mit dem von der Steuerung 20 zugeführten Bitmuster, das dasselbe ist, das in den Speicher 30 an der ersten Adresse eingeschrieben und in vorher beschriebener Weise ausgesendet wurde. Dieser Vergleich erfolgt jedoch, gesteuert durch das UND-Glied 45, nur an einer bestimmten Stelle bzw. zu einem bestimmten Zeitpunkt im Rahmen, nämlich im ersten Wort derjenigen Gruppe, in der sendeseitig das Bitmuster ausgesendet wurde. Dafür ist ein zusätzlicher Vergleicher 46 vorgesehen, der entsprechende Ausgänge eines Zählers 48, der ebenfalls anhand der Fig. 7 erläutert wird, mit der von der Steuerung 20 gelieferten Nummer der Gruppe vergleicht, die auch dem Vergleicher 38 zugeführt wurde. Wenn diese Gruppe im empfangsseitigen Rahmen auftritt, gibt der Vergleicher 46 ein Signal an den einen Eingang des UND-Gliedes 45 ab, dessen anderer Eingang mit einem Ausgang des Zählers 48 in Fig. 7 verbunden ist, der nur beim ersten Wort jeder Gruppe, d.h. beim Signalisierwort, ein Signal erzeugt. Auf diese Weise prüft der Vergleicher 36, ob das im Signalisierwort einer bestimmten Gruppe ausgesendete Bitmuster empfangsseitig an derselben Stelle im Rahmen unverändert empfangen wird.

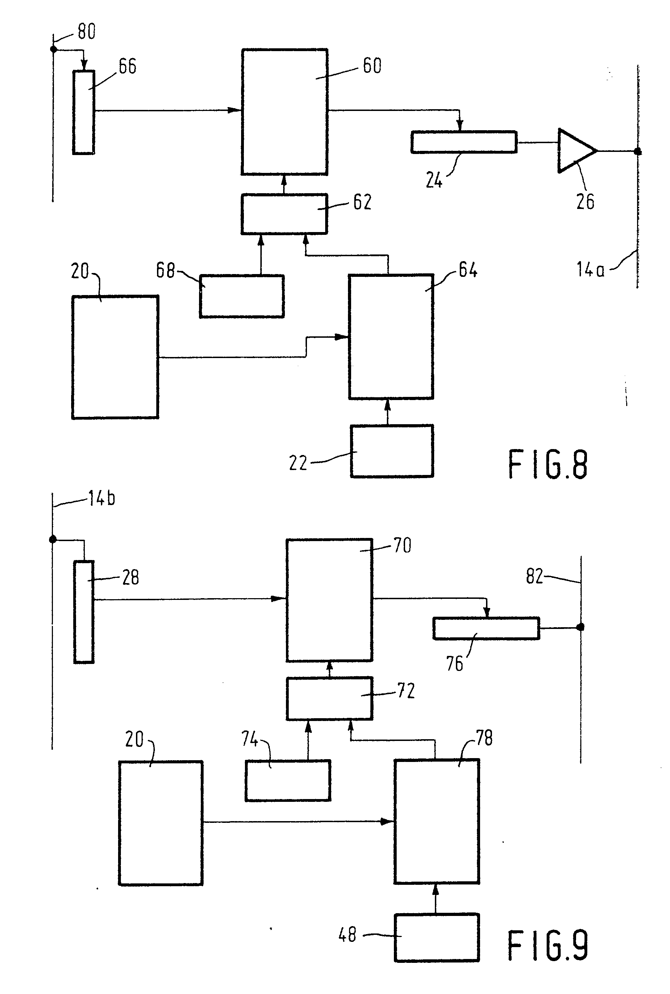

Wenn dies nicht der Fall ist, wird ein entsprechendes Signal zur Steuerung 20 gegeben, wodurch diese erfährt, daß die Teilnehmerstelle den Zugriff zur gewünschten Gruppe im Hochgeschwindigkeitskanal nicht erhalten hat und später einen neuen Versuch vornehmen muß, wobei möglicherweise entsprechend vorhergehender Beschreibung das Bitmuster geändert sein kann. Wenn jedoch das empfangene Bitmuster mit dem an dieser Stelle ausgesendeten Bitmuster übereinstimmt, wird in der nächsten Gruppe von Wörtern im sendeseitigen Zeitmultiplexrahmen vom Wort 2 an durch den Zähler 22 das UND-Glied 42 und damit über das ODER-Glied 44 der Sendeverstärker 26 freigegeben, und gleichzeitig werden von dem Zähler 22 über den Multiplexer 32 die weiteren Wörter aus dem Speicher 30 nacheinander ausgelesen, jeweils in das Senderegister 24 parallel angelegt und seriell daraus dem Dateneingang des Sendeverstärkers 26 zugeführt. Auf diese Weise wird also das in dem Speicher 30 enthaltene Datenpaket über die Sendeleitung 14a ausgesendet. Die Ausgänge des Zählers 22 werden ferner noch dem Verbindungsspeicher 64 zugeführt, der anhand der Fig. 8 näher erläutert wird.

Eine Einrichtung für den Empfang eines Datenpaketes ist in Fig. 7 schematisch dargestellt. Die auf der Empfangsleitung 14b ankommenden Daten werden einem Empfangsregister 28 zugeführt, das jeweils die zu einem Wort gehörenden 8 Bit seriell aufnimmt und parallel am Ausgang abgibt. Auch hier ist ein Zähler 48 vorhanden, der synchron mit den Wörtern in dem Zeitmultiplexrahmen der Empfangsleitung 14b läuft und an den Ausgängen der niedrigsten Bits die Wortnummer innerhalb der jeweiligen Gruppe und an den Ausgängen für die höherwertigen Bits die Gruppennummer abgibt. Der Einfachheit halber sind die Ausgänge alle als eine Linie dargestellt, wobei der Ausgang für das erste Wort jeder Gruppe wie erwähnt den Vergleicher 36 in Fig. 6 steuert. Ferner werden die Ausgänge auch einem weiteren Verbindungsspeicher 78 zugeführt, der anhand

der Fig. 9 erläutert wird. Auch hier ist die Synchronisation des Zählers 48 der Einfachheit halber nicht dargestellt.

Der Ausgang des Empfangsregisters 28, der wie erwähnt auch auf den Vergleicher 36 in Fig. 6 führt, ist außerdem mit dem Eingang eines weiteren Vergleichers 56 verbunden, der am anderen Eingang von der Steuerung 20 die Nummer der betreffenden Teilnehmerstation erhält, in der diese Anordnung vorhanden ist. Dieser Vergleicher 56 wird jeweils durch den Ausgang des Zählers 48 für das zweite Wort einer Gruppe aufgesteuert, da dieses jeweils das erste Wort eines Datenpaketes darstellt und die Zieladresse enthält, d.h. die Adresse bzw. Nummer der Teilnehmerstation, für die das Datenpaket bestimmt ist. Wenn also ein für die Teilnehmerstation, deren Empfangsteil in Fig. 7 dargestellt ist, bestimmtes Datenpaket ankommt, gibt der Vergleicher 56 ein Signal ab, das für den Rest der Wörter dieser Gruppe das UND-Glied 58 freigibt. Dieses erhält ferner während der folgenden Wörter der Gruppe Signale vom Zähler 48 und schaltet während dieser Zeit einen Speicher 50 auf Einschreiben, der ebenso wie der Speicher 30 in Fig. 6 aufgebaut ist. Dieser Speicher 50 wird von dem Zähler 48 über den Multiplexer 52 adressiert und schreibt somit die nacheinander über die Eingangsleitung 14b eintreffenden Daten der folgenden Wörter der betreffenden Gruppe wortweise ein. Nach dem Einschreiben wird der Multiplexer 52 umgeschaltet, und der Speicher 50 wird über die Adressensteuerung 54 von der Steuerung 20 gesteuert ausgelesen, und die ausgelesenen Daten werden der Steuerung 20 zur Auswertung zugeführt. Wenn das empfangene Datenpaket die Nummern von Schmalbandkanälen enthielt, in denen anschließend eine Schmalbandkanal-Gesprächsverbindung aufgebaut werden soll, steuert die Steuerung 20 mit den aus dem Speicher 50 ausgelesenen Daten beispielsweise einen Verbindungsspeicher an, wie nachfolgend erläutert wird.

In Fig. 8 sind die wichtigsten Elemente einer Teilnehmerstation dargestellt, die für das Aussenden von Gesprächsdaten in Schmalbandkanälen notwendig sind. Dabei wird angenommen, daß an diese Teilnehmerstation eine Anzahl Teilnehmer über eine Empfangs-Zeitmultiplexleitung 80 angeschlossen sind, die ebenfalls mit einer Rahmenfrequenz von 8 kHz arbeitet, bei dem jedoch jeder Rahmen nur 32 Wörter mit je 8 Bit enthält, so daß 32 Teilnehmer gleichzeitig aktiv sein können. Der Empfangs-Zeitmultiplexkanal 80 ist an den Serieneingang eines Schieberegisters 66 angeschlossen, der jeweils die 8 aufeinanderfolgenden Bits eines Wortes parallel abgibt und einem Datenspeicher 60 zuführt, der 32 Speicherplätze für je 8 Bit enthält.

Diese Speicherplätze werden beim Einschreiben über einen Multiplexer 62 von einem Zähler 68 gesteuert, der synchron mit den Wörtern auf der Leitung 80 zählt. Damit ist im Datenspeicher 60 jeder Speicherstelle ein bestimmtes Wort auf der Leitung 80 fest zugeordnet.

Beim Auslesen wird der Multiplexer 62 umgeschaltet und der Datenspeicher 60 von dem Verbindungsspeicher 64 adressiert. Dieser letztere wird wie erwähnt von dem Zähler 22 in Fig. 6 adressiert und enthält für jedes Wort auf der Sende-Zeitmultiplexleitung 14a einen Speicherplatz, d.h. bei einer Rahmenstruktur von acht Gruppen mit jeweils 32 Wörtern insgesamt 256 Speicherplätze. Jeder Speicherplatz kann 5 Bit aufnehmen, um einen Speicherplatz des Datenspeichers 60 zu adressieren. Der Verbindungsspeicher 64 wird während der Rufaufbauphase von der Steuerung 20 mit den in einem entsprechenden Datenpaket vorher empfangenen Verbindungsdaten geladen und enthält für jedes Wort im Rahmen der hochfrequenten Zeitmultiplex-Übertragungsleitung 14a die Angabe, aus welcher Speicherstelle und damit welches Wort der Empfangs-Zeitmultiplexleitung 80 bzw. ob überhaupt eine Information in diesem Wort ausgesendet werden soll. Wenn ein Wort entsprechend einem Abtastwert eines Gesprächskanals ausgesendet werden soll, wird dieses aus dem Datenspeichers 60 ausgelesen und beispielsweise dem Sende-Pufferregister 24 zugeführt, das dieses Wort bitseriell über den Sendeverstärker 26 der Sende-Zeitmultiplexleitung 14a zuführt.

Da im Gegensatz zur Übertragung von Datenpaketen die Gesprächsdatenwörter periodisch mit einer Frequenz von 8 kHz übertragen werden, muß der Datenspeicher 60 periodisch abwechselnd eingeschrieben und ausgelesen werden. Dies kann auch zeitverschachtelt erfolgen, wenn der Datenspeicher 60 innerhalb der Dauer eines Wortes auf der hochfrequenten Sende-Zeitmultiplexleitung 14a sowohl eingeschrieben als auch an einer anderen Stelle ausgelesen werden kann. Gegebenenfalls ist eine kurze zeitliche Verschiebung des einzuschreibenden Wortes notwendig, die leicht dadurch ermöglicht werden kann, wenn das Register 66 doppelt vorgesehen und abwechselnd umgeschaltet wird.

Entsprechend ist die Anordnung der Elemente für den Empfang von Gesprächsdaten, die in Fig. 9 dargestellt ist. Die auf der Empfangsleitung 14b seriell ankommenden Daten werden wieder dem Empfangsregister 28 zugeführt und in parallel vorliegende Wörter umgewandelt. Diese werden dem Dateneingang eines Empfangs-Datenspeichers 70 zugeführt, der über einen Multiplexer 72 von einem weiteren Verbindungsspeicher 78 adressiert wird. Dessen Funktion entspricht weitgehend der des Speichers 64 in Fig. 8, und er wird während der Rufaufbauphase ebenfalls von der Steuerung 20 geladen. Dieser weitere Verbindungsspeicher 78 wird wie erwähnt von dem Zähler 48 in Fig. 7 adressiert, der synchron mit den Worten im Rahmen auf der Empfangs-Multiplexleitung 14b zählt. Da auch der Empfangs-Datenspeicher 70 insgesamt 32 Speicherplätze für je ein 8-Bit-Wort enthält, können die Daten von maximal 32 Schmalbandkanälen der Empfangs-Zeitmultiplexleitung 14b aufgenommen werden. Zum Auslesen schaltet der Multiplexer 72 die Adresseneingänge des Empfangs-Datenspeichers 70 auf die Ausgänge eines Zählers 74 um, der synchron mit den Worten auf einer niederfrequenten Sende-Multiplexleitung 82 zählt, die parallel zu der Empfangs-Multiplexleitung 80 mit einzelnen Teilnehmern verbunden ist. Die aus dem Empfangs-Datenspeicher 70 ausgelesenen Worte werden nacheinander einem Schieberegister 76 zugeführt, dessen Serienausgang mit der niederfrequenten Sende-Multiplexleitung 82 verbunden ist. Auch bei dem Empfangs-Datenspeicher 70 erfolgt das Einschreiben und Auslesen zeitlich verschachtelt wie beim Datenspeicher 60 für die Sendeseite.

Tabelle

|        |     |         |         |
|--------|-----|---------|---------|
|        | 1   | 0 0 0 0 | 0 0 0 0 |
|        | 2   | 0 0 0 0 | 0 0 0 1 |
|        | 3   | 0 0 0 0 | 0 0 1 0 |
| Gr. 1  | .   |         |         |
|        | .   |         |         |
|        | .   |         |         |
|        | 15  | 0 0 0 0 | 1 1 1 0 |
|        | 16  | 0 0 0 0 | 1 1 1 1 |
|        | 17  | 0 0 0 1 | 1 1 1 1 |
|        | 18  | 0 0 1 0 | 1 1 1 1 |
| Gr. 2  | .   |         |         |
|        | .   |         |         |
|        | .   |         |         |
|        | 30  | 1 1 1 0 | 1 1 1 1 |
|        | 31  | 1 1 1 1 | 1 1 1 1 |

**Patentansprüche**

1. Verfahren zum Steuern des Zugriffs auf einen Zeitmultiplex-Nachrichtenübertragungsweg, an den eine zentrale Einheit und mehrere Teilnehmer angeschlossen sind und auf dem die zentrale Einheit zyklisch wiederholt Rahmen aus einer vorgegebenen Anzahl von Wörtern mit je einer vorgegebenen Anzahl von Bits erzeugt, wobei jedem Rahmen mindestens ein Signalisierwort zugeordnet ist und ein variabler zusammenhängender Teil der Anzahl der Wörter für Schmalbandkanäle, in denen in jedem Rahmen nur ein Wort übertragen wird, und ein weiterer variabler zusammenhängender Teil der Anzahl der Wörter für die Bildung eines Hochgeschwindigkeitskanals vorbehalten ist, in dem Datenpakete in einer Folge von aufeinanderfolgenden Wörtern mindestens eines Rahmens übertragen wird, dadurch gekennzeichnet, daß der Rahmen in mehrere Gruppen von Wörtern eingeteilt ist, denen je ein Signalisierwort zugeordnet ist, daß die zentrale Einheit in den Signalisierwörtern der Gruppen, die Schmalbandkanälen zugeordnet sind, ständig ein vorgegebenes erstes Bitmuster überträgt und daß ein Teilnehmer vor einer Übertragung eines Datenpaketes im Hochgeschwindigkeitskanal in einem Signalisierwort einer der Gruppen, die dem Hochgeschwindigkeitskanal zugeordnet sind, ein diesem Teilnehmer zugeordnetes Bitmuster überträgt und bei anschließendem Emfpang des ungestörten Bitmusters in der dem Signalisierwort zugeordneten Gruppe sein Datenpaket überträgt.

2. Verfahren nach Anspruch 1, dadurch gekennzeichnet, daß alle Gruppen die gleiche Anzahl Wörter enthalten.

3. Verfahren nach Anspruch 1 oder 2, dadurch gekennzeichnet, daß jede Gruppe ein Signalisierwort enthält, das einer folgenden Gruppe zugeordnet ist.

4. Verfahren nach einem der Ansprüche 1 bis 3, dadurch gekennzeichnet, daß die den einzelnen Teilnehmern individuell fest zugeordneten Bitmuster verschiedene Prioritäten aufweisen und daß beim gleichzeitigen Übertragen verschiedener Bitmuster von mehreren Teilnehmern im selben Signalisierwort nur das Bitmuster höchster Priorität weitergeleitet wird.

5. Verfahren nach einem der Ansprüche 1 bis 3, dadurch gekennzeichnet, daß die binären Werte aus den Bitmustern verschiedener Teilnehmer, die gleichzeitig im selben Signalisierwort übertragen werden, entsprechend einer ODER-Funktion verknüpft werden und daß ein Teilnehmer, der nach dem Aussenden seines Bitmusters an dessen Stelle ein anderes Bitmuster empfängt, nach einer im wesentlichen statistisch bestimmten Zeitspanne erneut sein Bitmuster in einem Signalisierwort überträgt.

6. Verfahren nach Anspruch 5, dadurch gekennzeichnet, daß die Zeitspannen für Teilnehmer mit niedrigerer Priorität länger sind als für Teilnehmer mit höherer Priorität.

7. Verfahren nach einem der Ansprüche 1 bis 3, dadurch gekennzeichnet, daß die binären Werte aus den Bitmustern verschiedener Teilnehmer, die gleichzeitig im selben Signalisierwort übertragen werden, entsprechend einer ODER-Funktion verknüpft werden und daß die den Stationen zugeordneten Bitmuster aus zwei Gruppen von Bitmustern ausgewählt werden, von denen die Bitmuster der ersten Gruppe in einem ersten Bitmusterteil nur Bitwerte des anderen binären Wertes enthalten und die Bitmuster der zweiten Gruppe in einem zweiten Bitmusterteil nur Bitwerte des einen binären Wertes enthalten.

8. Verfahren nach Anspruch 7, dadurch gekennzeichnet, daß beide Bitmusterteile die gleiche Anzahl Bit enthalten.

9. Verfahren nach Anspruch 8, dadurch gekennzeichnet, daß die beiden Bitmusterteile zusammen genau das vollständige Bitmuster ergeben.

10. Verfahren nach Anspruch 9, dadurch gekennzeichnet, daß beide Bitmusterteile die gleiche Anzahl Bit enthalten.

11. Verfahren nach einem der Ansprüche 8 bis 10, dadurch gekennzeichnet, daß in den Stationen auf jeweils ein gemeinsames Steuersignal die den einzelnen Stationen zugeordneten Bitmuster zyklisch im Ring gewechselt werden.

12. Verfahren nach einem der Ansprüche 8 bis 10, dadurch gekennzeichnet, daß jeweils zwei Stationen paarweise einander zugeordnet sind und auf ein Steuersignal das Bitmuster der jeweils anderen Station des Paares übernehmen, wobei ein Bitmuster jedes Paares der Stationen der ersten Gruppe und das andere Bitmuster des Paares der Stationen der zweiten Gruppe angehört.

13. Verfahren nach Anspruch 12, dadurch gekennzeichnet, daß die jeweils zwei zusammengehörigen Bitmuster so ausgewählt werden, daß beide Stationen zusammen bei der Hälfte aller Kollisionsfälle, bei denen eine Station den Zugriff zum Datenbus behält, selbst den Zugriff zum Datenbus behalten.

14. Verfahren nach einem der Ansprüche 8 bis 10, dadurch gekennzeichnet, daß jeder Station sowohl ein Bitmuster der ersten Gruppe als auch ein Bitmuster der zweiten Gruppe zugeordnet wird und auf ein Steuersignal hin auf jeweils das andere Bitmuster umgeschaltet wird.

15. Verfahren nach Anspruch 14, dadurch gekennzeichnet, daß die jeweils zwei zusammengehörigen Bitmuster so ausgewählt werden, daß die Station im zeitlichen Mittel bei der Hälfte aller Kollisionsfälle, bei denen eine Station den Zugriff zum Datenbus behält, selbst den Zugriff zum Datenbus behält.

16. Verfahren nach einem der Ansprüche 11 bis 15, dadurch gekennzeichnet, daß das Steuersignal ein bestimmtes Rahmensynchronisiersignal ist.

17. Verfahren nach einem der Ansprüche 4 bis 16, dadurch gekennzeichnet, daß das den Schmalbandkanälen zugeordnete erste Bitmuster höchste Priorität bzw. an jeder Stelle den höchsten in allen übrigen Signalisierwörtern an der Stelle vorkommenden binären Wert aufweist.

18. Verfahren nach einem der Ansprüche 4 bis 17, dadurch gekennzeichnet, daß ein Teilnehmer, der ein Datenpaket übertragen will, das länger als ein Gruppe von Wörtern ist, bei Empfang seines Bitmusters in mindestens dem nächsten nachfolgenden Signalisierwort ein Bitmuster mit höchster Priorität bzw. mit an jeder Stelle dem höchsten in allen übrigen Signalisierwörtern an der Stelle vorkommenden binären Wert in allen Stellen aussendet.

19. Anordnung zur Durchführung des Verfahrens nach einem der Ansprüche 1 bis 18 mit mindestens einer Sendeanordnung zum Aussenden von Daten über den Nachrichtenübertragungsweg und einer Empfangsanordnung zum Empfangen von Daten vom Nachrichtenübertragungsweg sowie mit mindestens einer Zählanordnung, die synchron mit dem Rahmen mindestens die Wörter zählt und die Sendeanordnung und die Empfangsanordnung steuert, dadurch gekennzeichnet, daß die Zählanordnung (22, 48) erste Ausgänge aufweist, deren Signale die einzelnen Gruppen von Wörtern angeben, und zweite Ausgänge, deren Signale die Wörter innerhalb der jeweiligen Gruppe angeben, daß die Sendeanordnung (24, 26, 40 bis 46) für einen gewünschten Zugriff zum Nachrichtenübertragungsweg in dem ersten Wort bzw. dem Signalisierwort einer Gruppe in einem Rahmen ein der Anordnung zugeordnetes Bitmuster über den Nachrichtenübertragungsweg aussendet, daß ein Vergleicher (36) durch die Zählanordnung (22, 48) gesteuert das in dem Signalisierwort der der Aussendung entsprechenden Gruppe empfangene Wort mit dem ausgesendeten Bitmuster vergleicht und bei positivem Vergleichsergebnis die Sendeanordnung (24, 26, 40 bis 46) zum Aussenden einer Nachricht in dem zweiten und den folgenden Wörtern der der Gruppe, in deren Signalisierwort das übereinstimmende Bitmuster empfangen wurde, zugeordneten Gruppe ansteuert und bei negativem Vergleichsergebnis die Übertragung weiterer Nachrichten abbricht, wobei der Vergleicher (36) stets ein negatives Vergleichsergebnis liefert, wenn in dem Signalisierwort derjenigen Gruppe, in der das Bitmuster verglichen wird, gleichzeitig von der zentralen Einheit ein einen Schmalbandkanal kennzeichnendes Bitmuster ausgesendet wird.

## Claims

1. A method of controlling access to a time-division multiplex message transmission path to which a central unit and a plurality of subscribers are connected and on which the central unit produces cyclically recurring frames of a predetermined number of words each having a predetermined number of bits, at least one signalling word being assigned to each frame and a variable, contiguous portion of the said number of words being allocated to narrow-band channels through each of which a word is transmitted in each frame, and a further variable, contiguous portion of the said number of words is reserved for the forming of a high-rate channel through which data packets are transmitted in a sequence of consecutive words, wherein the frame is divided into several groups of words, a signalling word being assigned to each group, the central unit continuously transmits a predetermined first bit sample in the signalling words of the groups to which narrow band channels are assigned and prior to transmission of a data packet in the high-rate channel a subscriber transmits, in a signalling word of one of the word groups that are assigned to the high-rate channel a bit sample which is individually assigned to him and at a subsequent reception of the undisturbed bit sample in the group to which that signalling word is assigned, the subscriber transmits his data packet.

2. A method as claimed in Claim 1, wherein all groups comprise the same number of words.

3. A method as claimed in Claim 1 or 2, wherein each group comprises a signalling word assigned to a following group.

4. A method as claimed in one of the Claims 1 to 3, wherein the individual subscribers have individual fixedly assigned bit samples of different priorities and wherein, at the simultaneous transmission of different bit samples of a plurality of subscribers in the same signalling word, only the bit sample having the highest priority is passed on.

5. A method as claimed in one of the Claims 1 to 3, wherein the binary values from the bit samples of different subscribers which are simultaneously transmitted in the same signalling word are arranged in accordance with an OR-function and wherein a subscriber, after transmitting his bit sample, receives another bit sample in its location and transmits his bit sample again in a signalling word after an in essence statistically determined time interval.

6. A method as claimed in Claim 5, wherein the time intervals for subscribers having lower priorities are longer than the intervals for subscribers having higher priorities.

7. A method as claimed in one of the Claims 1 to 3, wherein the binary values of the bit samples of different subscribers, wich values are simultaneously transmitted in the same signalling word are processed in accordance with an OR-function and wherein the bit samples assigned to the subscribers are chosen from two group of bit samples from which the bit samples of the first group contain in a first bit sample portion only bit values of the second value and the bit samples of the second group contain in a second bit sample portion only bit values of the first binary value.

8. A method as claimed in Claim 7, wherein the two bit sample portions have the same number of bits.

9. A method as claimed in Claim 8, wherein the two bit sample portions together accurately represent the complete bit sample.

10. A method as claimed in Claim 9, wherein the two bit sample portions comprise the same number of bits.

11. A method as claimed in one of the Claims 8 to 10, wherein in the subscriber stations, in response to each common control signal, the bit samples assigned to individual subscribers are cyclically changed in the ring.

12. A method as claimed in one of the Claims 8 to 10, wherein two subscribers are always paired and in response to a control signal they take over the bit sample from the other station of the pair, a bit sample of each pair of subscribers being associated with the first group and the other bit sample of the pair of subscribers being associated with the second group.

13. A method as claimed in Claim 12, wherein each two associated bit samples are chosen such that in half the number of all the conflicting situations, in which one subscriber keeps access to the data bus, the two subscribers together keep access to the data bus.

14. A method as claimed in one of the Claims 8 to 10, wherein both a bit sample of the first group and a bit sample of the second group are assigned to each subscriber and in response to a control signal a change-over is effected to the other bit sample.

15. A method as claimed in Claim 14, wherein each two associated bit samples are chosen such that on a time average the subscriber keeps access to the data bus in half the number of all the conflicting situations in which one subscriber keeps access to the data bus.

16. A method as claimed in one of the Claims 11 to 15, wherein the control signal is a specific frame synchronizing signal.

17. A method as claimed in one of the Claims 4 to 16, wherein the first bit sample assigned to the narrow-band channels has the highest priority or in each position the highest binary value occurring in all the remaining signalling words in the position.

18. A method as claimed in one of the Claims 4 to 17, wherein a subscriber who wants to transmit a data packet which is longer than a group of words transmits, on the reception of his bit sample, in at least the subsequent signalling word a bit sample having the highest priority or having in each position the highest binary value of the bits occurring in all the remaining signalling words in corresponding bit positions.

19. An arrangement for implementing the method as claimed in one of the Claims 1 to 18, comprising at least a transmitting arrangement for transmitting data via the message transmission path and a receiving arrangement for receiving data from the message transmission path, also comprising at least a counting device counting the words in synchronism with the frame and controlling the transmission and receiving arrangements, wherein the counting device (22, 48) has first outputs whose signals indicate the individual groups of words, and second outputs whose signals indicate the words within each group, wherein the transmitting arrangement (24, 26, 40 to 46) transmits via the transmission path for a desired access to the message transmission path in the first word or the signalling word of a group respectively, in a frame a bit sample assigned to the arrangement, wherein a comparator (36) controlled by the counting arrangement (22, 48) compares the word received in the signalling word of the group corresponding with the transmission to the transmitted bit sample and in the case of a positive result of this comparison triggers the transmitting arrangement (24, 26, 40 to 46) to transmit a message in the second and subsequent words of the groups which are associated with the groups in whose signalling word the corresponding bit sample was received and in the case of a negative result of the comparison interrupts the transmission of further messages, the comparator (36) always producing a negative result when in the signalling word of that group in which the bit sample was compared, a bit sample which is characteristic of a narrow-band channel is simultaneously transmitted by the central unit.

**Revendications**

1. Procédé pour commander l'accès à une voie de télécommunication à multiplexage temporel, à laquelle une unité centrale et plusieurs abonnés sont connectés et sur laquelle l'unité centrale produit, à répétition cyclique, des trames d'un nombre prédéfini de mots contenant chacun un nombre prédéfini de bits, au moins un mot de signalisation étant associé à chaque trame, et une partie cohérente variable du nombre de mots étant réservée pour des canaux à bande étroite dans lesquels un seul mot est transmis dans chaque trame et une autre partie cohérente variable du nombre des mots étant réservée pour la formation d'un canal à grande vitesse dans lequel des paquets de données sont transmis chaque fois en une séquence de mots successifs d'au moins une trame, caractérisé en ce que la trame est divisée en plusieurs groupes de mots à chacun desquels est associé un mot de signalisation, que l'unité centrale transmet de manière continue une première configuration binaire prédéfinie dans les mots de signalisation des groupes qui sont associés à des canaux à bande étroite et qu'un abonné, avant de transmettre un paquet de données dans le canal à grande vitesse, transmet dans un mot de signalisation d'un des groupes associés au canal à grande vitesse, une configuration binaire qui lui est associée en propre et, en cas de réception ultérieure de la configuration binaire sans perturbation, dans le groupe associé au mot de signalisation, transmet son paquet de données.

2. Procédé suivant la revendication 1, caractérisé en ce que tous les groupes contiennent le même nombre de mots.

3. Procédé suivant la revendication 1 ou 2, caractérisé en ce que chaque groupe contient un mot de signalisation qui est associé à un groupe suivant.

4. Procédé suivant l'une quelconque des revendications 1 à 3, caractérisé en ce que les configurations binaires associées à demeure individuellement aux divers abonnés présentent des priorités différentes et que, lors de la transmission simultanée de diverses configurations binaires de plusieurs abonnés dans le même mot de signalisation, seule la configuration binaire de la priorité supérieure est transmise.

5. Procédé suivant l'une quelconque des revendications 1 à 3, caractérisé en ce que les valeurs binaires des configurations binaires provenant de divers abonnés et transmises simultanément dans le même mot de signalisation sont combinées selon une fonction OU et qu'un abonné qui, après l'émission de sa configuration binaire, reçoit une autre configuration binaire au lieu de la sienne, transmet une nouvelle fois sa configuration binaire dans un mot de signalisation après une durée déterminée en substance statistiquement.

6. Procédé suivant la revendication 5, caractérisé en ce que les intervalles prévus pour des abonnés de priorité inférieure sont plus longs que ceux prévus pour des abonnés de priorité supérieure.

7. Procédé suivant l'une quelconque des revendications 1 à 3, caractérisé en ce que les valeurs binaires appartenant à des configurations binaires d'abonnés différents, qui sont transmises simultanément dans le même mot de signalisation, sont combinées selon une fonction OU et que les configurations binaires associées aux postes sont sélectionnées dans deux groupes de configurations binaires, dans lesquels les configurations binaires du premier groupe ne contiennent, dans une première partie de configuration binaire, que des bits de l'autre valeur binaire et les configurations binaires du second groupe ne contiennent, dans une seconde partie de configuration binaire, que des bits de la première valeur binaire.

8. Procédé suivant la revendication 7, caractérisé en ce que les deux parties de configuration binaire contiennent le même nobre de bits.

9. Procédé suivant la revendication 8, caractérisé en ce que les deux parties de configurations binaires donnent ensemble exactement la configuration binaire complète.

10. Procédé suivant la revendication 9, caractérisé en ce que les deux parties de configurations binaires contiennent le même nombre de bits.

11. Procédé suivant l'une quelconque des revendications 8 à 10, caractérisé en ce que dans les postes, les configurations binaires associées aux postes individuels sont changées de manière cyclique dans l'anneau, chaque fois par un signal de commande commun.

12. Procédé suivant l'une quelconque des revendications 8 à 10, caractérisé en ce que les postes sont mutuellement associés par paire et reprennent chacun, à l'apparition d'un signal de commande, la configuration binaire de l'autre poste de leur paire, une configuration binaire de chaque paire de postes appartenant au premier groupe et l'autre configuration binaire de la paire de postes appartenant au second groupe.

13. Procédé suivant la revendication 12, caractérisé en ce que les deux configurations binaires sont chaque fois associées l'une à l'autre sont sélectionnées d'une manière telle que les deux postes obtiennent sur l'ensemble l'accès au bus de données pour la moitié de tous les cas de collision pour lesquels un poste obtient l'accès au bus de données.

14. Procédé suivant l'une quelconque des revendications 8 à 10, caractérisé en ce qu'une configuration binaire du premier groupe et une configuration bianaire du second groupe sont associées à chaque poste et, à l'apparition d'un signal de commande, les configurations binaires sont permutées par commutation.

15. Procédé suivant la revendication 14, caractérisé en ce que les deux configurations binaires qui sont chaque fois associées l'une à l'autre sont sélectionnées d'une manière telle que, pris sur une moyenne de temps, chaque poste obtienne lui-même l'accès au bus de données pour la moitié de tous les cas de collision pour lesquels un poste obtient l'accès au bus de données.

16. Procédé suivant l'une quelconque des revendications 11 à 15, caractérisé en ce que le signal de commande est un signal de synchronisation de trame déterminé.

17. Procédé suivant l'une quelconque des revendications 4 à 16, caractérisé en ce que la première configuration binaire associée aux canaux à bande étroite présente la priorité la plus haute ou, à chaque emplacement, la plus haute de toutes les valeurs binaires apparaissant à cet emplacement dans tous les autres mots de signalisation.

18. Procédé suivant l'une quelconque des revendications 4 à 17, caractérisé en ce qu'un abonné, qui souhaite transmettre un paquet de données dont la longueur est supérieure à celle d'un groupe de mots, émet, à la réception de sa configuration binaire, au moins dans le mot de signalisation le plus proche suivant, une configuration binaire de la priorité maximale ou, à chaque emplacement, de la plus haute des valeurs binaires apparaissant à cet emplacement dans tous les autres mots de signalisation.

19. Système pour réaliser le procédé suivant l'une quelconque des revendications 1 à 18, comportant au moins un dispositif d'émission pour émettre des données par l'intermédiaire de la voie de télécommunication et un dispositif récepteur pour recevoir des données de la voie de télécommunication ainsi qu'au moins un dispositif de comptage qui compte au moins les mots en synchronisme avec la trame et commande le dispositif d'émission et le dispositif de réception, caractérisé en ce que le dispositif de comptage (22, 48) comporte des premières sorties, dont les signaux indiquent les groupes individuels de mots, et des secondes sorties, dont les signaux indiquent les mots à l'intérieur des groupes respectifs, que le dispositif d'émission (24, 26, 40 à 46) émet, pour un accès souhaité à la voie de télécommunication, dans le premier mot ou mot de signalisation d'un groupe d'une trame, une configuration binaire associée au dispositif, par l'intermédiaire de la voie de télécommunication, qu'un comparateur (36) commandé par le dispositif de comptage (22, 48) compare le mot reçu dans le mot de signalisation du groupe correspondant à l'émission à la configuration binaire émise et, dans le cas d'un résultat positif de la comparaison, active le dispositif d'émission (24, 26, 40 à 46) pour qu'il émette un message dans le deuxième mot et les mots suivants des groupes associés au groupe dans le mot de signalisation duquel la configuration binaire concordante a été reçue et, dans le cas d'un résultat négatif de la comparaison, interrompt la transmission d'autres messages, le comparateur (36) fournissant toujours un résultat de comparaison négatif lorsque, dans le mot de signalisation du groupe dont la configuration binaire fait l'objet de la comparaison, une configuration binaire caractérisant un canal à bande étroite est simultanément émise par l'unité centrale.

FIG.1

FIG.5

FIG.2

FIG.3

FIG.4

FIG.6

FIG.7

FIG.8

FIG.9